Europäisches Patentamt

European Patent Office

Office européen des brevets

(11) Publication number: **0 329 880 B1**

# EUROPEAN PATENT SPECIFICATION

(45) Date of publication of patent specification: **21.04.93** (51) Int. Cl.⁵: **B23P 13/02**, B23P 25/00

(21) Application number: **88301708.9**

(22) Date of filing: **26.02.88**

(54) **Method of machining a cylindrical article.**

(43) Date of publication of application:
**30.08.89 Bulletin 89/35**

(45) Publication of the grant of the patent:
**21.04.93 Bulletin 93/16**

(84) Designated Contracting States:
**DE FR GB IT**

(56) References cited:

**PATENT ABSTRACTS OF JAPAN, vol. 9, no. 191 (M-402)[1914], 7th August 1985; & JP-A-60 56 861 (MITSUBISHI JUKOGYO K.K.) 02-04-1985**

(73) Proprietor: **ISHIKAWAJIMA-HARIMA JUKOGYO KABUSHIKI KAISHA**
**2-1, Ote-machi 2-chome**
**Chiyoda-ku Tokyo 100(JP)**

(72) Inventor: **Shiozawa, Makoto**
**No. 1-24-4, Konandai Konan-ku**
**Yokohama-shi Kanagawa-ken(JP)**
Inventor: **Yamaguchi, Satoshi**
**No. 1587-6, Imajukuhigashi-cho Asahi-ku**
**Yokohama-shi Kanagawa-ken(JP)**
Inventor: **Ueda, Koh**
**No. 3-5-4, Chidori Ota-ku**
**Tokyo-to(JP)**

(74) Representative: **Jennings, Nigel Robin et al**
**KILBURN & STRODE 30 John Street**
**London WC1N 2DD (GB)**

Rank Xerox (UK) Business Services
(3.10/3.5x/3.0.1)

EP 0 329 880 B1

## Description

The present invention relates to a method of machining a shaft or roll, which, in use, is normally subjected to an elevated temperature. Such a method is described for example in JP-A-60-56 861.

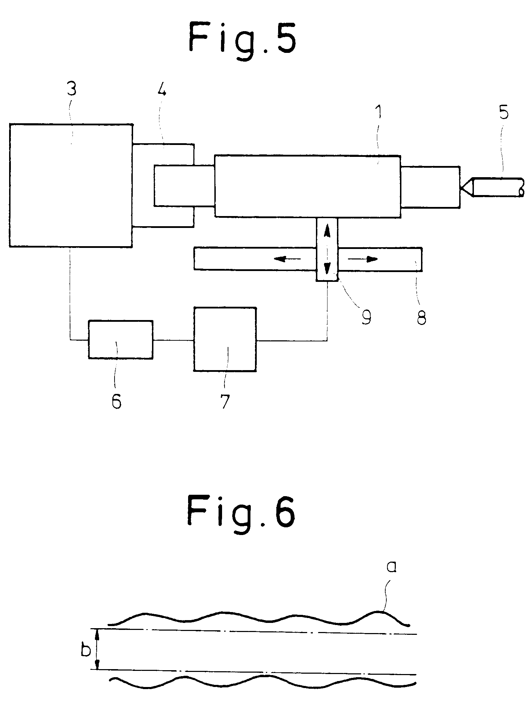

Rolls are used in various types of rolling-mill stand for rolling workpieces. Use of a roll at a temperature which is different from room or ambient temperature may cause the circularity of the roll to be degraded by differential thermal expansion or shrinkage of the roll, i.e. by distortions of the roll whereby axial bending of the roll may occur within the limits of elastic deformation of the roll. Such bending will result in so-called runout of the roll during its rotation. For example, when calendering is carried out with such runout on the calender rolls, a sheet a which has been rolled has surface irregularities in the longitudinal direction, as shown in Figure 6, so that in practice only the inner portion b of the sheet a can be used as calendered product which results in a lower degree of accuracy in the thickness and a poor yield as well as a variation in patterns and colour tones.

In order to prevent such distortions, it has been proposed to machine such rolls at the expected working temperature of the rolls.

However, machining of a roll at its working temperature is frequently found to be impractical, especially when the working temperature is high (for instance, the working temperature when calendering a sheet of polyvinyl chloride is about 180-220°C), as regards the initial heating of the roll, the maintenance of the elevated temperature, the uniformity of the heat distribution (thermal nonuniformity), ease and safety in operation and thermal effects on the machinery used. As a consequence even rolls used for rolling at higher working temperatures are generally machined to a sufficient degree of accuracy at room temperature. It has also been the practice to set an accuracy reference and utilise rolls having an accuracy below the accuracy reference in applications other than rolling. As a result, the problem of finished sheets of low quality and lower yield still remains.

It is thus an object of the present invention to provide a machining method by which a shaft or other cylindrical article is shaped to have substantially perfect circularity in cross section under its actual working conditions.

According to the present invention, a method of machining a roll or shaft comprises machining the roll or shaft at substantially room temperature to be of substantially perfect circular shape in cross section and is characterised by subjecting the roll or shaft to conditions which correspond to the conditions to which the roll or shaft will be subjected in use, measuring the maximum circumferential distortion of the roll or shaft relative to a perfect circular shape at longitudinally spaced positions on the roll or shaft, determining degrees of correction at each longitudinally spaced position based on a mathematical equation involving the maximum circumferential distortion and a sine function, and machining the roll or shaft substantially at room temperature in accordance with the degrees of correction to impart a non-circular shape to the roll or shaft, whereby when the roll or shaft is used its cross sectional shape is substantially perfectly circular.

Further features and details of the present invention will be apparent from the following description of one specific embodiment which is given by way of example with reference to Figures 1 to 5 of the accompanying drawings, in which:-

Figures 1(A) to 1(D) are schematic views illustrating the machining steps used in the present invention;

Figure 2 illustrates the positions at which the distortions of a shaft are measured;

Figure 3 is a diagram illustrating the relationship between angular position and the measured distortions;

Figures 4(A) and 4(B) are views illustrating the changes of the outer configuration of a shaft; and

Figure 5 is a schematic view used to explain the grinding or cutting means used for machining a shaft.

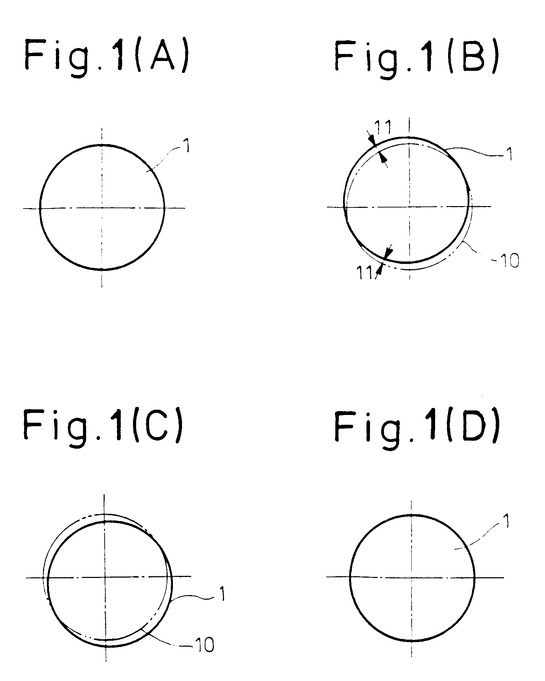

Figure 1(A) is a cross sectional view of a shaft 1 which was machined at room temperature so as to have a substantially perfectly round cross sectional configuration. This shaft is subjected to measurements for measuring the thermal distortions 11, i.e. the deviations from the truly circular shape 10, at circumferential points during practical use or under practical working conditions as shown in Figure 1(B). After the measurements, the shaft 1 is machined to have an out-of-round cross sectional configuration at room temperature such that the distortions or deviations 11 from perfect roundness are substantially eliminated or compensated for under the practical working conditions. When the shaft 1 which has been machined is used in the practical working conditions, it has substantially perfect circularity as shown in Figure 1(D).

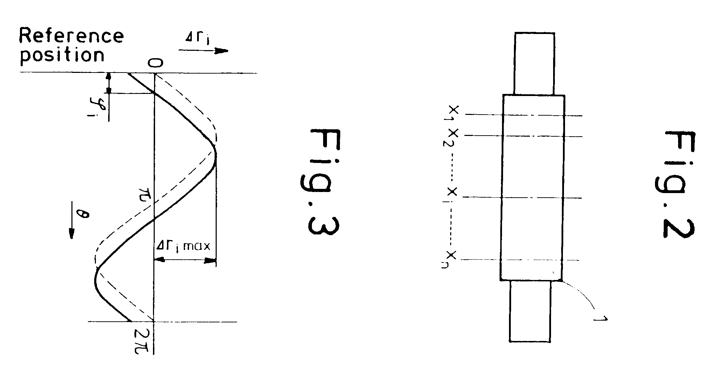

The present invention will now be described in more detail with reference to Figures 2 to 5.

As shown in Figure 2, the shaft 1 which has been ground to have substantially perfect circularity in cross section at room temperature, is subjected to practical working conditions, i.e. the anticipated normal working temperature, and the circumferential distortions at predetermined longitudinal positions $X_1$, $X_2$,...,$X_i$,...and $X_n$ are measured. In

practice it is found that not only may the cross-section of the shaft become non-circular but also the axis of the shaft may be deformed.

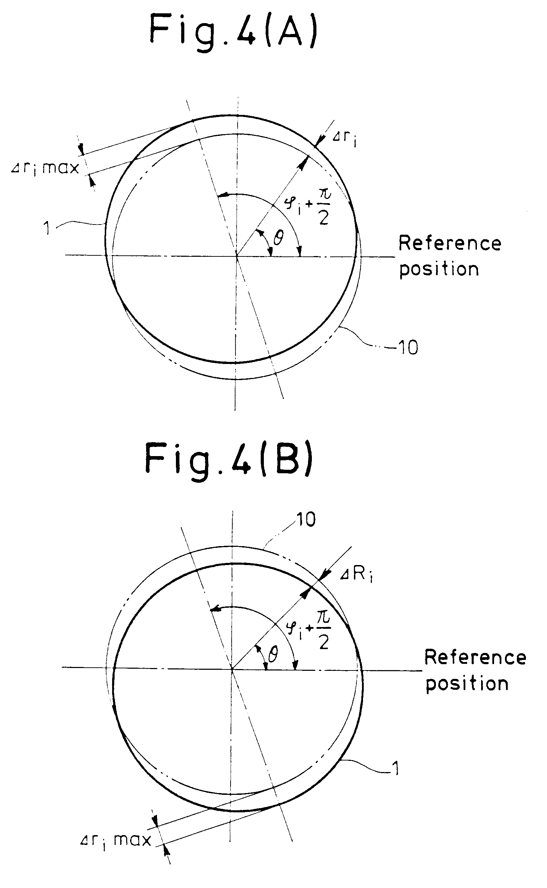

The results of extensive tests made by the inventors indicate that at any longitudinal position $X_i$ the distortion $r_i$ at an angular position $\theta$ angularly spaced from a circumferential reference position $\phi_i$, can be approximated by a sine curve, as shown in Figures 3 and 4(A). (In Figure 3, the curve in chain lines indicates the distortion when the reference position is a position in which there is no distortion).

With the maximum degree of distortion being $\Delta r_{imax}$ it is sufficient for the compensation if the shape of the shaft is adjusted by the same amount as the distortion but in the opposite sense, as shown in Figure 4(B). The degree of correction or compensation $\Delta R_i$ at an angular position $\theta$ spaced away from the circumferential reference position of the shaft 1 can be defined as follows:

$$\Delta R_i - \Delta r_{i\,max} \cdot \sin(\theta - \phi_i)$$

After the degrees of correction $\Delta R_i$ have been determined for all the longitudinal positions $X_1$-$X_n$ of the shaft 1, the shaft 1 is supported at its ends by a chuck 4 on a rotary device 3 and a tail stock 5, respectively, as shown in Figure 5. Based on the angle $\theta$ of rotation of the shaft 1, which is detected by a phase detector 6, a control unit 7 transmits a control signal to a grinding or cutting machine 9 which is slidably disposed on a guide 8 which extends parallel to the axis of the shaft 1. The shaft 1 is ground or cut by the grinding or cutting machine 9 which slides along the guide 8 and moved towards and away from the shaft 1 in response to the control signals from the control unit 6. In practice, if the shaft is found to extend by, say, 1mm beyond the perfect circular shape on one side, then 1mm of material is removed at that position. If the shaft has a radius less than the required value at a certain point it is, however, in practice not necessary to add material at that point.

When the shaft 1 has been machined in this manner it has a non-circular cross sectional configuration at room temperature but a substantially perfect round cross sectional configuration under its practical working conditions and the "runout" can be prevented during rotation of the shaft 1.

The fact that the degrees of correction may be defined in the form of a function facilitates input of them into the grinding or cutting machine.

It is to be understood that the present invention is not limited to the embodiment described above and that various changes and modifications may be effected. For instance, instead of using degrees of correction in the form of a function, the degrees of correction may be appropriate values at a suitable angle spacing. Furthermore, the method of the present invention may be equally applied to a hollow shaft.

## Claims

1.  A method of machining a roll or shaft comprising machining the roll or shaft at substantially room temperature to be of substantially perfect circular shape in cross section, characterised by subjecting the roll or shaft (1) to conditions which correspond to the conditions to which the roll or shaft will be subjected in use, measuring the maximum circumferential distortion (11) of the roll or shaft relative to a perfect circular shape at longitudinally spaced positions ($X_1, X_2...X_n$) on the roll or shaft, determining degrees of correction at each longitudinally spaced position based on a mathetmical equation involving the maximum circumferential distortion and a sine function , and machining the roll or shaft at substantially room temperature in accordance with the degrees of correction to impart a non-circular shape to the roll or shaft, whereby when the roll or shaft is used its cross sectional shape is substantially perfectly circular.

## Patentansprüche

1.  Verfahren zum Bearbeiten einer Walze oder Welle (eines zylindrischen Artikels), umfassend das Bearbeiten eines zylindrischen Artikels bei im wesentlichen Raumtemperatur, so daß dieser einen im wesentlichen perfekt kreisförmigen Querschnitt aufweist, dadurch gekennzeichnet, daß der zylindrische Artikel (1) Bedingungen ausgesetzt wird, die denen entsprechen, denen der zylindrische Artikel im Betrieb ausgesetzt sein wird, die maximale Verformung (11) entlang des Umfangs des zylindrischen Artikels im Vergleich zu einer perfekt kreisförmigen Form an in Längsrichtung voneinander beabstandeten Positionen ($x_1, x_2...x_n$) auf dem zylindrischen Artikel gemessen wird, Korrekturgrade bei jeder Längsposition, basierend auf einer mathematischen Gleichung, welche die maximale Verformung entlang des Umfangs und eine Sinusfunktion einbezieht, bestimmt werden, und der zylindrische Artikel bei im wesentlichen Raumtemperatur in Übereinstimmung mit den Korrekturgraden bearbeitet wird, um dem zylindrischen Artikel eine nicht-kreisförmige Form zu geben, wodurch die Querschnittsform des zylindrischen Artikels während des Gebrauchs im wesentlichen perfekt kreisförmig ist.

**Revendications**

1. Procédé pour usiner un rouleau ou un arbre comprenant l'usinage du rouleau ou de l'arbre à une température pratiquement ambiante pour qu'il soit d'une forme pratiquement circulaire parfaite en section transversale, caractérisé par les étapes consistant à soumettre le rouleau ou l'arbre (1) à des conditions qui correspondent aux conditions dans lesquelles le rouleau ou l'arbre sera soumis en utilisation, à mesurer la déformation circonférentielle maximale (11) du rouleau ou de l'arbre par rapport à la forme circulaire parfaite à des positions longitudinalement espacées ($X_1$, $X_2$ ... $X_n$) sur le rouleau ou l'arbre, à déterminer les degrés de correction à chaque position longitudinalement espacée basés sur une équation mathématique impliquant la déformation circonférentielle maximale et une fonction sinusoïdale, et à usiner le rouleau ou l'arbre à température pratiquement ambiante en conformité avec les degrés de correction pour donner une forme non circulaire au rouleau ou à l'arbre, de telle manière que lorsque le rouleau ou l'arbre est utilisé, sa forme en section transversale est pratiquement parfaitement circulaire.

# Fig.1(A)

# Fig.1(B)

# Fig.1(C)

# Fig.1(D)

# Fig.2

$$x_1 \quad x_2 \cdots\cdots x_i \cdots\cdots x_n$$

# Fig.3

# Fig.4(A)

# Fig.4(B)

# Fig.5

# Fig.6